# FASCICULE DE BREVET EUROPEEN

(11) **EP 0 462 881 B1**
(45) Date de publication et mention de la délivrance du brevet: **27.08.1997**
(21) Numéro de dépôt: 91401612.6
(22) Date de dépôt: 17.06.1991
(51) Int. Cl.: G02B 6/38

(54) **Paroi de séparation entre deux milieux, équipée d'un dispositif de raccordement de deux fibres optiques**
Wand zur Abtrennung zweier Bereiche mit einer Vorrichtung zur Verbindung von zwei optischen Fasern
Wall for separating two spaces, provided with a device for connecting two optical fibres

(30) Priorité: 18.06.1990 FR 9007572
(43) Date de publication de la demande: 27.12.1991
(73) Titulaire: COMMISSARIAT A L'ENERGIE ATOMIQUE, 75015 Paris (FR)
(72) Inventeur: Tcherniaeff, Alexandre, F-33700 Mérignac (FR)
(74) Mandataire: Poulin, Gérard

(56) Documents cités:
- EP-A- 0 210 921
- DE-A- 3 005 388
- DE-A- 3 641 145
- FR-A- 2 319 140
- FR-A- 2 319 140
- US-A- 4 616 900

## Description

La présente invention concerne une paroi de séparation entre deux milieux, équipée d'un dispositif de raccordement de deux fibres optiques.

Elle s'applique notamment à la transmission d'informations par fibres optiques.

On connaît déjà, par le document US-A-4 616 900, une paroi de séparation entre deux milieux, équipée d'un dispositif de raccordement de deux fibres optiques et on connaît aussi divers dispositifs de raccordement de deux fibres optiques.

Ces dispositifs visent à raccorder les fibres en minimisant la perte d'insertion mesurée sur le faisceau lumineux transmis par les fibres.

On connaît notamment un premier dispositif de raccordement qui utilise une table de positionnement à trois axes.

Il s'agit d'un dispositif difficilement utilisable en dehors d'un laboratoire.

On connaît aussi un deuxième dispositif de raccordement qui est commercialisé par la société Radiall sous la marque "système OFTABALL".

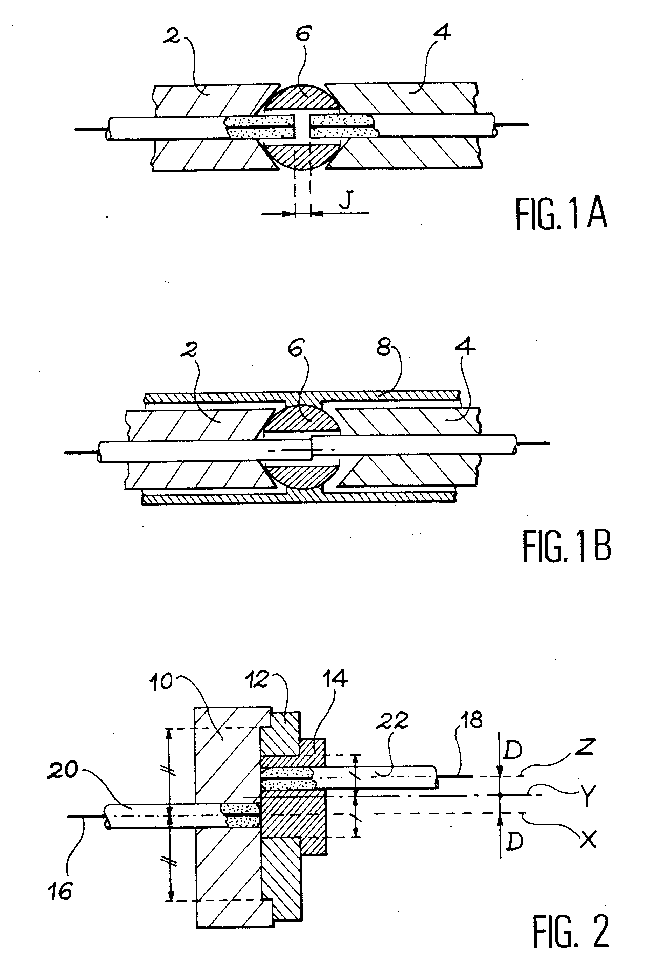

Ce deuxième dispositif est schématiquement et partiellement représenté sur la figure 1A et comprend deux fiches optiques 2 et 4 et une traversée à deux entrées opposées, cette traversée comportant une bille percée 6.

Le polissage des extrémités des fibres que comportent les fiches doit être effectué de façon très précise.

En cas de non atteinte d'une cote-étalon fixée pour les extrémités des fibres (figure 1A), il existe un jeu J relativement important entre les deux fiches, ce qui provoque une diminution de la qualité du signal lumineux transmis.

En cas de dépassement de la cote-étalon (figure 1B), le jeu entre les fiches 2 et 4 n'est plus réglé par le contact du cône de chacune d'elles avec la bille 6 qui est sertie dans la traversée 8.

L'effort de serrage, par vissage des fiches sur la traversée, est appliqué directement sur les coeurs polis des fibres optiques que comportent les fiches.

Il en résulte un risque de détérioration du polissage des coeurs par pression et fracture de ces coeurs ; de plus, l'une des fiches, la fiche 4 sur la figure 1B, est flottante, d'où un centrage défectueux des coeurs qui se traduit par une réduction de la surface de transmission et donc une atténuation du signal lumineux transmis.

Avec ce deuxième dispositif, il convient donc de respecter impérativement la cote-étalon sous peine de mauvaise qualité ou d'atténuation du signal lumineux transmis.

On connaît également un troisième dispositif de raccordement qui nécessite un manchon cylindrique à alésage excentré pour chacune des deux fibres ainsi qu'un corps cylindrique dans lequel sont introduits les manchons.

Ce troisième dispositif connu présente l'inconvénient de nécessiter, pour son réglage, la manipulation de chacun des deux embouts, ou "ferrules", dont sont pourvues les fibres.

La présente invention a pour but de remédier à cet inconvénient en proposant une paroi équipée d'un dispositif de raccordement tel que le réglage de ce dispositif et l'immobilisation des fibres, dans la position où elles sont raccordées l'une à l'autre, se fassent d'un seul côté de ce dispositif. Ceci est avantageux en particulier dans le cas où le dispositif est prévu pour traverser (de façon étanche) une paroi destinée à séparer un milieu qui peut être hostile d'un milieu qui ne l'est pas : on est alors capable d'établir la liaison optique entre les fibres en intervenant uniquement du côté non hostile (en montant bien entendu le dispositif de façon que les moyens de réglage et d'immobilisation soient de ce côté).

De façon précise, la présente invention a pour objet une paroi de séparation entre un premier milieu et un deuxième milieu, équipée d'un dispositif de raccordement d'une première fibre optique à une deuxième fibre optique conformément à la revendication 1.

Ainsi, lorsqu'on monte le dispositif sur un premier côté de la paroi, on peut mettre en place la première fibre de l'autre côté de cette paroi et effectuer le réglage optimal de la liaison optique et l'immobilisation de la deuxième fibre par rapport à la première, du premier côté de la paroi.

Certes, on connaît par le document FR-A-2319140 un dispositif de raccordement de deux fibres optiques pourvu d'un double excentrique similaire à celui dont est pourvu le dispositif de raccordement constitutif de la présente invention. Mais aucune traversée de paroi n'est envisagée dans ce document. De même, ce document n'envisage aucun moyen propre à empêcher toute rotation intempestive des supports tournants durant leur immobilisation par serrage contre le support fixe au moyen d'un écrou de serrage correspondant.

De préférence, le deuxième support, l'écrou de serrage et la rondelle de serrage du dispositif constitutif de l'invention comportent chacun une fente permettant le passage de la deuxième fibre optique.

On facilite ainsi le montage du dispositif, en évitant d'avoir à mettre en place le deuxième support, l'écrou de serrage et la rondelle de serrage à partir de l'extrémité de la deuxième fibre optique, extrémité qui ne participe pas au raccordement.

Enfin, le premier support et la première fibre optique du dispositif constitutif de l'invention peuvent être munis de moyens d'étanchéité permettant d'obtenir une traversée étanche de la paroi.

La présente invention sera mieux comprise à la lecture de la description d'exemples de réalisaticn donnés ci-après à titre purement indicatif et nullement limitatif, en référence aux dessins annexés sur lesquels :
- les figures 1A et 1B, déjà décrites, représentent schématiquement et partiellement un dispositif connu de raccordement de fibres optiques, qui est commercialisé par la société Radiall,
- la figure 2 illustre le principe de la présente invention,
- la figure 3 est une vue schématique en coupe longitudinale d'un mode de réalisation particulier de la présente invention,
- la figure 4 est une vue suivant la coupe IV-IV de la figure 3, l'écrou que comporte le dispositif représenté sur la figure 3 ayant été retiré, et
- la figure 5 est une vue schématique et partielle du dispositif représenté sur la figure 3 après réglage de ce dispositif pour aligner les fibres.

Le dispositif schématiquement représenté sur la figure 2 permet de comprendre le principe de l'invention.

Le dispositif de la figure 2 comprend un premier support 10, un deuxième support 12 et un troisième support 14.

Ce dispositif est destiné à raccorder deux fibres optiques 16 et 18 dont les extrémités que l'on veut raccorder sont respectivement montées dans des embouts ou ferrules 20 et 22.

Le support 10 est pourvu d'un perçage axial dans lequel est logé et fixé (par collage par exemple) l'embout 20 de la fibre 16.

Le support 12 est apte à tourner autour de son axe qui est confondu avec l'axe X du support 10.

Le support 14, de forme cylindrique, est monté tournant dans un perçage excentré que comporte le support 12, dont l'axe Y est à une distance D de l'axe X.

Cette distance D est par exemple de l'ordre de 0,3 mm à 0,5 mm.

L'axe du support 14 est confondu avec l'axe Y (qui est parallèle à l'axe X).

Le support 14 comporte lui-même un perçage excentré dans lequel est logé et fixé (par collage par exemple) l'embout 22 de la fibre 18 et dont l'axe Z est parallèle à l'axe Y et situé à la distance D de cet axe Y.

L'axe de la fibre 18 est confondu avec l'axe Z du perçage excentré du support 14.

On voit que, par des rotations appropriées des supports 12 et 14 autour de leurs axes respectifs X et Y, on peut, dans tous les cas, faire coïncider les axes respectifs des fibres optiques 16 et 18, c'est-à-dire les axes des coeurs de ces fibres.

On notera qu'un dispositif conforme à l'invention est de préférence conçu de telle façon que les deux fibres, lorsque leur liaison optique est réalisée, soient presque en contact l'une avec l'autre, c'est-à-dire soient à moins d'un micromètre l'une de l'autre, d'où de très faibles pertes d'insertion.

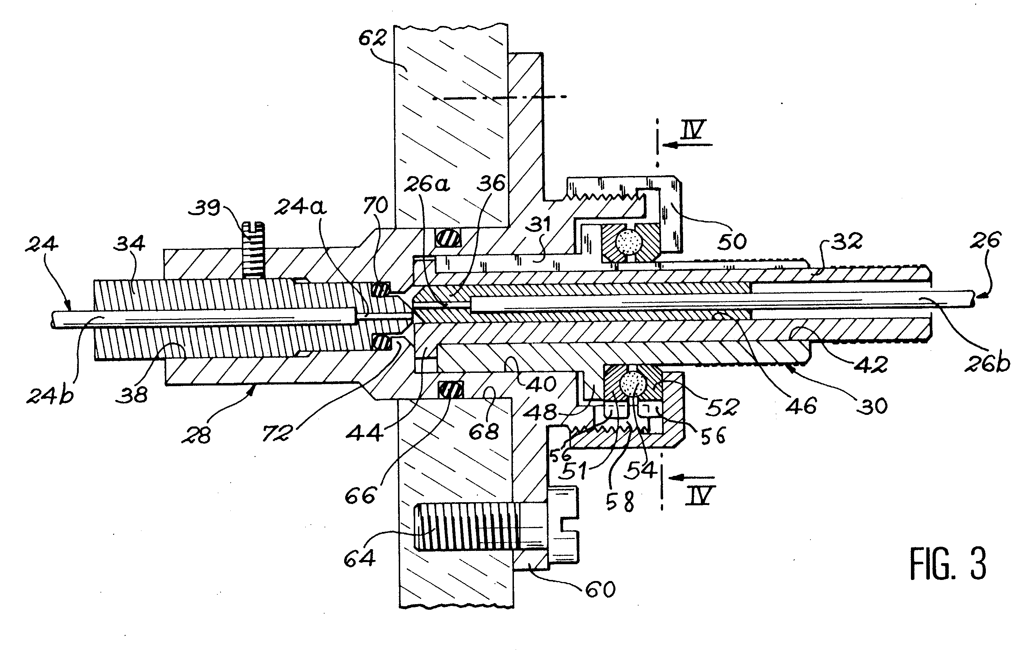

Le mode de réalisation particulier de l'invention, qui est schématiquement représenté sur la figure 3, est destiné à raccorder deux fibres optiques 24 et 26 et comprend à cet effet trois supports 28, 30 et 32.

L'extrémité de la fibre 24, qui est destinée à être raccordée à la fibre 26, est logée dans un embout ou ferrule 34.

De même, l'extrémité de la fibre 26, qui est destinée à être raccordée à la fibre 24, est logée dans un embout ou ferrule 36.

Le premier support ou corps 28 comporte, d'un côté, un alésage central 38 dans lequel est logée et fixée (par exemple grâce à une vis de serrage 39 mais, de préférence, par collage) la ferrule 34 et, de l'autre côté, un autre alésage 40 central dont l'axe est confondu avec l'axe de l'alésage 38 et qui communique avec ce dernier.

Le second support 30 est logé dans l'alésage central 40 et son axe coïncide avec celui de cet alésage 40.

En outre, le second support 30 est prévu pour tourner dans l'alésage 40 autour de l'axe de ce dernier.

Le second support 30 comporte lui-même un alésage excentré 42, dont l'axe est parallèle à l'axe du support 30 et situé à la distance déterminée D de ce dernier axe.

Le troisième support 32 est logé dans l'alésage excentré 42 et son axe coïncide avec celui de cet alésage 42.

En outre, le troisième support 32 est prévu pour tourner dans l'alésage excentré 42 autour de l'axe de ce dernier.

L'extrémité du troisième support 32, qui se trouve du côté de la ferrule 34, comporte un épaulement externe 44 qui est pris entre le support fixe 28 et le support tournant 30.

De plus, le troisième support 32 comporte un alésage excentré 46 dont l'axe est parallèle à l'axe du support 32 et situé à la distance D de ce dernier axe.

La ferrule 36 est logée et fixée dans cet alésage excentré 46 de façon que l'extrémité de la fibre 26 devant être raccordée à la fibre 24 se trouve en regard de cette dernière.

Afin de pouvoir immobiliser la fibre 26 par rapport à la fibre 24 lorsqu'on a réalisé une liaison optique entre ces dernières, le second support 30 comporte un épaulement externe 48 et le dispositif représenté sur la figure 3 est muni de moyens d'immobilisation.

Ces derniers comprennent un écrou de serrage 50 et un ensemble qui forme une rondelle de serrage et qui comporte deux flasques 51 et 52 et, entre ces dernières, une rondelle compressible 54.

La rondelle de serrage est traversée par le support 30 et prise entre l'épaulement 48 de ce dernier et la partie arrière de l'écrou 50.

Cet écrou 50 est vissé sur le support 28 dont la périphérie est filetée à cet effet, du côté où se trouve l'embout 36, comme on le voit sur la figure 3.

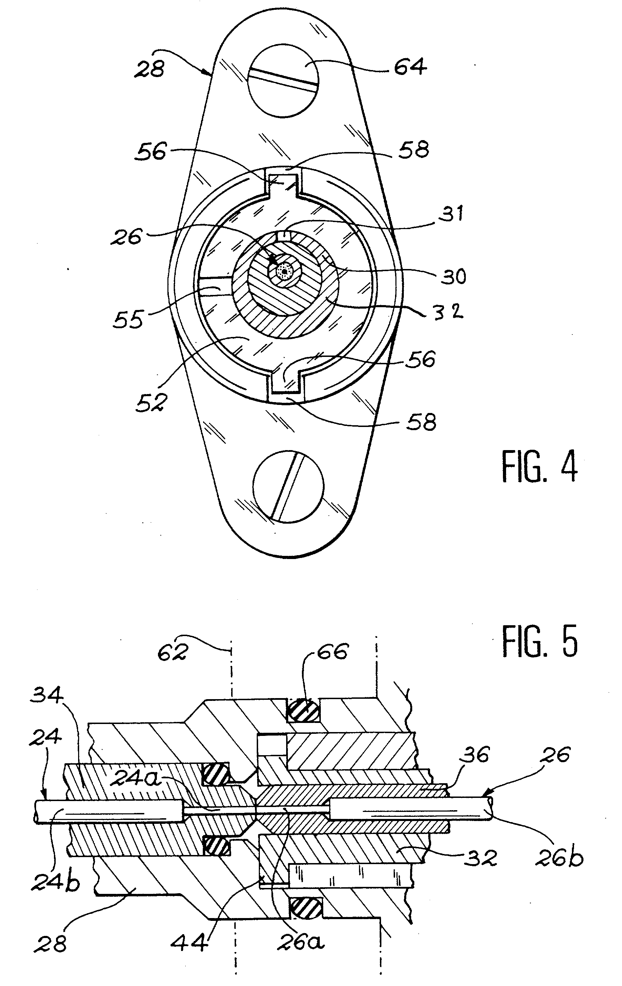

Afin de pouvoir bloquer la rondelle de serrage en rotation dans le support 28, les flasques 51 et 52 comportent des tenons de blocage en rotation 56 (figure 4) qui coopèrent avec des crans 58 réalisés dans le support 28.

L'écrou 50, les flasques 51 et 52, la rondelle compressible 54 et le support 30 (formant un fourreau) sont fendus pour permettre le passage de la fibre optique 26.

On utilise par exemple des fibres optiques de type PCS 200 qui ont un coeur en silice de 200 micromètres de diamètre (±4%), une gaine optique de 380 micromètres de diamètre externe (±8%), une gaine mécanique en plastique de 600 micromètres de diamètre externe (±8%) et un surgainage de 1,5 mm de diamètre externe.

On va maintenant expliquer le montage et le réglage du dispositif représenté sur la figure 3.
a) On prépare chacune des fibres 24 et 26 en conservant la gaine mécanique (référencée 24a pour la fibre 24 et 26a pour la fibre 26) autour de la gaine optique et en enlevant sur quelques millimètres le surgainage (référencé 24b pour la fibre 24 et 26b pour la fibre 26).
b) On enfile et on colle les ferrules 34 et 36 respectivement sur les fibres 24 et 26, le collage étant réalisé au niveau des surgainages et des gaines mécaniques.
c) On polit mécaniquement l'extrémité de chaque ferrule et de la fibre optique gainée correspondante.
d) On enfile la ferrule 36, munie de la fibre 26, dans le troisième support 32, jusqu'à ce que cette ferrule 36 affleure la face d'extrémité du support 32, face qui est destinée à se trouver en regard de l'alésage 38, et l'on colle la ferrule 36 dans cette position.
e) On enfile le support, ou fourreau, fendu 30 sur le support 32, jusqu'à ce que le support 30 vienne en butée contre l'épaulement ou collerette 44 du support 32.

La fente 31 du fourreau 30 a une largeur suffisante pour permettre le passage du surgainage 26b.

Cette fente est utile dans le cas où la fibre 26 est très longue ou possède en son autre extrémité un élément dont le diamètre extérieur est supérieur au diamètre de l'alésage du fourreau 30 ; en effet, il est alors possible de passer la fibre 26 munie de son surgainage 26b dans la fente et l'on enfile ensuite le support 30 sur le fourreau 32.
f) On enfile la rondelle de serrage fendue comprenant les flasques 51 et 52 collés contre la rondelle compressible 54, la largeur des fentes alignées correspondantes 55 (figure 4) étant également suffisante pour permettre le passage du surgainage 26b, et l'on met cette rondelle de serrage en butée contre l'épaulement 48.
g) On emmanche l'ensemble formé par le support 30, le support 32 et la rondelle de serrage dans l'alésage 40 du support 28, en plaçant les tenons 56 de la rondelle de serrage dans les crans 58 du support 28.
h) On enfile l'écrou fendu 50 (dont la fente a également une largeur suffisante pour permettre le passage du surgainage 26b) et on visse cet écrou 50 sur le filetage du support 28 en assurant une légère pression sur les faces en butée.
i) Après avoir déposé un film de liquide adaptateur d'indice sur l'extrémité du coeur de la fibre 24, on enfile cette fibre 24 dans l'alésage 38 du support 28.
j) On assure un quasi-contact entre les coeurs polis des fibres 24 et 26 et l'on colle la ferrule 34 dans cette position.
k) On injecte un faisceau laser dans l'une des fibres 24 et 26 par son extrémité opposée au dispositif de raccordement.
l) On fait tourner avec les doigts les supports 30 et 32 pourvus de parties moletées à cet effet (le support 32 dépassant du support 30 comme on le voit sur la figure 3), jusqu'à ce que,le signal lumineux issu de l'autre fibre soit maximum.
m) On bloque l'écrou 50.

La liaison optique entre les fibres 24 et 26 est alors établie comme on le voit sur la figure 5.

Le dispositif représenté sur la figure 3 peut être conçu pour constituer une traversée étanche d'une paroi qui sépare deux milieux gazeux ou même qui sépare un milieu gazeux tel que l'air d'un milieu liquide tel que l'eau par exemple.

Pour ce faire, le support 28 comporte une bride 60 à sa périphérie. Cette bride 60 est destinée à être plaquée contre la paroi 62 et fixée de façon étanche à celle-ci grâce à des vis telles que la vis 64 (quine traversent pas la paroi).

De plus, on joint d'étanchéité 66 est prévu sur une partie de la périphérie du support 28, partie qui est destinée à se trouver dans le perçage 68 de la paroi 62.

En outre, un autre joint d'étanchéité 70 est prévu sur l'extrémité de la ferrule 34 (de diamètre réduit par rapport au reste de la ferrule 34), ce joint 70 étant écrasé entre la ferrule 34 et un épaulement interne 72 du support 28 situé à l'extrémité de l'alésage 38.

Par ailleurs, le collage de la gaine mécanique 24a est étanche dans le cas où l'on prévoit de réaliser une telle traversée étanche.

Cette dernière, avec la paroi 62, permet de séparer une zone à la pression atmosphérique d'une zone où la pression est seulement de l'ordre de 0,1 Pa.

Les supports 28, 30 et 32 peuvent être réalisés par moulage par injection, ce qui réduit le coût du dispositif.

Avec des fibres optiques dont les coeurs ont un diamètre au moins égal à 10 micromètres, on peut utiliser des ferrules dont le diamètre extérieur est égal à 2,5 mm.

Les extrémités des ferrules et des fibres peuvent être polies au moyen d'une machine appropriée, sans avoir à respecter une cote de tolérance serrée, d'où un polissage excellent.

Le double excentrique utilisé dans le dispositif permet "d'absorber" tous les jeux mécaniques de rotation entre les éléments du dispositif et les excentrations inhérentes aux défauts de fabrication des fibres et aux collages.

Le dispositif est aisément utilisable à l'extérieur d'un laboratoire.

Avec des fibres optiques dont les coeurs ont des diamètres suffisamment importants (au moins 200 micromètres par exemple), il est possible de monter et de régler le dispositif en laboratoire en repérant par des marques les positions relatives des supports 28, 30, 32 du dispositif réglé ; ensuite, sur un site d'expérimentation, il n'y a plus qu'à remettre en place le support 30 et le support 32 sans avoir à recontrôler l'optimisation de la liaison optique.

On notera que le dispositif de la figure 3 une fois mis en place et la liaison optique effectuée, on peut si besoin est (incident ...) déconnecter la fibre 26 (située du côté accessible de la paroi) et la remplacer par une fibre identique sans avoir à intervenir de l'autre côté de la paroi.

## Revendications

1. Paroi de séparation entre un premier milieu et un deuxième milieu, équipée d'un dispositif de raccordement d'une première fibre optique (16;24) disposée dans le premier milieu à une deuxième fibre optique (18;26) disposée dans le deuxième milieu ledit dispositif comprenant:
- un premier support (28) (10;28) fixe traversant la paroi (62), dans lequel est fixée la première fibre optique (16;24),
- un deuxième support (12;30) monté, du côté du deuxième milieu, mobile en rotation par rapport au premier support (10;28), autour d'un axe confondu avec celui (X) de la première fibre optique (16;24), et
- un troisième support (14;32) monté, du côté du deuxième milieu, mobile en rotation par rapport au deuxième support (12;30), autour d'un axe (Y) parallèle à l'axe de rotation (X) du deuxième support (30) et situé à une distance pré-déterminée D de cet axe de rotation (X) du deuxième support (12;30), et au travers duquel est fixée la deuxième fibre optique (18;26), l'axe (Z) de cette dernière étant parallèle à l'axe de rotation (Y) du troisième support (14;32) et situé à ladite distance pré-déterminée D cet axe de rotation (Y) du troisième support (14;32), la distance de l'axe (X) de la première fibre optique (16;24) à l'axe (Z) de la deuxième fibre (18;26) étant ainsi au plus égal au double de ladite distance déterminée D, de façon que, par rotation des deuxième (12;30) et troisième (14;32) supports autour de leurs axes respectifs, on puisse faire coïncider les axes respectifs (X,Z) des fibres optiques (16, 18; 24, 26) et donc relier optiquement ces fibres l'une à l'autre, ledit dispositif comprenant en outre des moyens (50, 51, 52, 54) d'immobilisation de la deuxième fibre optique (18;26) par rapport à la première (16;24) dans leur position relative où elles sont reliées optiquement l'une à l'autre, ces moyens d'immobilisation étant montés du côté de la deuxième fibre optique, sur le deuxième support, le deuxième support (12;30) comportant un perçage (42) dont l'axe est parallèle à l'axe de rotation (X) du deuxième support (12;30) et situé à ladite distance prédéterminée D cet axe de rotation du deuxième support (12;30), le troisième support (14;32) étant monté tournant dans le perçage (42) du deuxième support (12;30), l'axe de rotation du troisième support (14;32) étant confondu avec l'axe (Y) de ce perçage (42) du deuxième support (12;30), le troisième support (14;32) comportant un perçage (46) dont l'axe (Z) est parallèle à l'axe de rotation du deuxième support (12;30) et situé à ladite distance prédéterminée D de l'axe de rotation (Y) du troisième support (32) et la deuxième fibre optique (18;26) étant logée dans le perçage (46) du troisième support (14;32), l'axe de cette deuxième fibre optique (18;26) étant confondu avec l'axe (Z) de ce perçage (46) du troisième support (14;32), l'extrémité du troisième support (14;32) située du côté du premier support (10;28), dépassant du deuxième support (14;30) et comportant un épaulement externe (44) et les moyens d'immobilisation (50, 51, 52, 54) étant aptes à presser le deuxième support (12;30) contre cet épaulement (44) et donc ce dernier contre le premier support (10;28), le deuxième support (12;30) comportant un épaulement externe (48), les moyens d'immobilisation comportant une rondelle de serrage (51, 52, 54) et un écrou de serrage (50) prévu pour être vissé sur le premier support (28) et pour appuyer contre l'épaulement (48) du deuxième support (12;30) par l'intermédiaire de la rondelle de serrage (51, 52, 54), cette rondelle de serrage comprenant des flasques (51,52) comportant des tenons de blocage en rotation (56) qui coopèrent avec des crans (58) réalisés dans le premier support (10;28), de façon à interdire toute rotation intempestive des deuxième et troisième supports durant leur immobilisation par vissage dudit écrou de serrage (50).

2. Paroi selon la revendication 1, caractérisée en ce que le deuxième support (30), l'écrou de serrage (50) et la rondelle de serrage (51, 52, 54) comportent chacun une fente radiale (31,58,55) permettant le passage de la deuxième fibre optique (26).

3. Paroi selon l'une quelconque des revendications 1 et 2, caractérisée en ce que le premier support (28) et la première fibre optique (24) sont munis de moyens d'étanchéité (66, 70) permettant d'obtenir une traversée étanche de la paroi (62).

## Patentansprüche

1. Trennwand zwischen einem ersten Bereich und einem zweiten Bereich, ausgerüstet mit einer Vorrichtung zur Verbindung einer ersten optische Faser (16;24), angeordnet in dem ersten Bereich, mit einer zweiten optischen Faser (18;26), angeordnet in dem zweiten Bereich, wobei besagte Vorrichtung umfaßt:
- einen ersten, feststehenden Träger (10;28), der die Wand (62) durchquert und in dem die erste optische Faser (16;24) befestigt ist,
- einen zweiten Träger (12;30), auf der Seite des zweiten Bereichs drehbar bezüglich des ersten Trägers (10;28) um eine Achse herum gelagert, die zusammenfällt mit derjenigen (X) der ersten optischen Faser (16;24), und
- einen dritten Träger (14;32) auf der Seite des zweiten Bereichs drehbar bezüglich des zweiten Trägers (12;30) um eine Achse (Y) herum gelagert, die parallel ist zu der Drehachse (X) des zweiten Trägers (30), mit einem festgelegten Abstand (D) von dieser Drehachse (X) des zweiten Trägers (12;30), und durch den hindurch die zweite optische Faser (18;26) befestigt ist, wobei die Achse (Z) dieser letzteren parallel ist zu der Drehachse (Y) des dritten Trägers (14;32), mit dem besagten festgelegten Abstand D von dieser Drehachse (Y) des dritten Trägers (14;32), und der Abstand der Achse (X) der ersten optischen Faser (16;24) von der Achse (Z) der zweiten Faser (18;26) somit höchstens doppelt so groß ist wie der festgelegte Abstand D, so daß man, durch Drehung des zweiten (12;30) und dritten (14;32) Trägers um die jeweilige Achse herum, die Achsen (X,Z) der optischen Fasern (16,18;24,26) zur Übereinstimmung bringen kann und folglich diese Fasern optisch miteinander verbinden kann, wobei besagte Vorrichtung außerdem Einrichtungen (50, 51, 52, 54) zum Blockieren der zweiten optischen Faser (18;26) in bezug auf die erste (16;24) in ihrer relativen Stellung umfassen, wo sie optisch miteinander verbunden sind, diese Blockiereinrichtungen auf der Seite der zweiten optischen Faser angebracht sind, auf dem zweiten Träger, der zweite Träger (12;30) eine Bohrung (42) umfaßt, deren Achse parallel ist zu der Drehachse (X) des zweiten Trägers (12;30) und zu dieser Drehachse des zweiten Trägers (12;30) den festgelegten Abstand D aufweist, der dritte Träger (14;32) drehbar in der Bohrung (42) des zweiten Trägers (12;30) gelagert ist, die Drehachse des dritten Trägers (14;32) zusammenfällt mit der Achse (Y) dieser Bohrung (42) des zweiten Trägers (12;30), der dritte Träger (14;32) ein Bohrung (46) umfaßt, deren Achse (Z) parallel ist zu der Drehachse des zweiten Trägers (12;30) und zu der Drehachse (Y) des dritten Trägers (32) den festgelegten Abstand D aufweist und die zweite optische Faser (18;26) in der Bohrung (46) des dritten Trägers (14;32) sitzt, die Achse dieser zweiten optischen Faser (18;26) zusammenfällt mit der Achse (Z) dieser Bohrung (46) des dritten Trägers (14;32), das Ende des dritten Trägers (14;32), auf der Seite des ersten Trägers (10;28) befindlich, aus dem zweiten Träger (12;30) vorsteht und eine Außenschulter (44) umfaßt und die Blockiereinrichtungen (50, 51, 52, 54) fähig sind, den zweiten Träger (12;30) gegen diese Schulter (44) zu pressen und letztere folglich gegen den ersten Träger (10;28), der zweite Träger (12;30) eine Außenschulter (48) umfaßt und die Blockiereinrichtungen ein Klemmscheibensystem und eine Klemm-Mutter umfassen, vorgesehen um auf den ersten Träger (28) geschraubt zu werden und über das Klemmscheibensystem (51, 52, 54) gegen die Schulter (48) des zweiten Trägers (12;30) zu pressen, wobei dieses Klemmscheibensystem Scheiben (51, 52) mit Rotationsblockierungs-Lappen (56) umfaßt, die zusammenwirken mit Ausschnitten, vorgesehen im ersten Träger (10;28), um jede unerwünschte Drehung des zweiten und dritten Trägers während ihrer Blockierung durch Festschrauben der Mutter (50) zu verhindern.

2. Wand nach Anspruch 1, dadurch gekennzeichnet, daß der zweite Träger (30), die Klemmmutter (50) und das Klemmscheibensystem (51, 52, 54) jeweils einen radialen Schlitz (31, 58, 55) aufweisen, der den Durchgang der zweiten optischen Faser (26) ermöglicht.

3. Wand nach einem der Ansprüche 1 und 2, dadurch gekennzeichnet, daß der erste Träger (28) und die erste optische Faser (24) mit Abdichtungseinrichtungen (66, 70) ausgestattet sind, die eine dichte Durchquerung der Wand (62) ermöglichen.

## Claims

1. Separating wall between a first medium and a second medium, equipped with a device for connecting a first optical fibre (16, 24) placed in the first medium to a second optical fibre (18, 26) located in the second medium, said device comprising a first support (10, 28) in fixed form traversing the wall (62) in which is fixed the first optical fibre (16, 24), a second support (12, 30), installed on the side of the second medium and rotating with respect to the first support (10, 28), about an axis coinciding with that (X) of the first optical fibre (16, 24) and a third support (14, 32) fitted on the side of the second medium and rotating with respect to the second support (12, 30) about an axis (Y) parallel to the rotation axis (X) of the second support (30) and located at a predetermined distance (D) of said rotation axis (X) from the second support (12, 30) and through which is fixed the second optical fibre (18, 26), the axis (Z) of the latter being parallel to the rotation axis (Y) of the third support (14, 32) and located at said predetermined distance (E) of the said rotation axis (Y) from the third support (14, 32), the distance of the axis (X) of the first optical fibre (16, 24) from the axis (Z) of the second fibre (12, 26) thus being at the most equal to double said predetermined distance (D), so that, by rotating the second support (12, 50) and third support (14, 32) about their respective axes, it is possible to bring about coincidence of the respective axes (X, Z) of the optical fibres (16, 18, 24, 26) and therefore optically connect said fibres to one another, said device also comprising means (50, 51, 52, 54) for immobilizing the second optical fibre (18, 26) with respect to the first fibre (16, 24) in their relative position where they are optically connected to one another, said immobilization means being installed on the side of the second optical fibre on the second support, said second support (12, 30) having an opening (42), whose axis is parallel to the rotation axis (Y) of the second support (12, 30) and located at said predetermined distance (D) of said rotation axis from the second support (12, 30), the third support (14, 32) being mounted so as to rotate in said opening (42) of the second support (12, 30), the rotation axis of the third support (14, 32) coinciding with the axis (Y) of said opening (42) of the second support (12, 30), the third support (14, 32) having an opening (46), whose axis (Z) is parallel to the rotation axis of the second support (12, 30) and located at said predetermined distance (D) from the rotation axis (Y) of the third support (32), the second optical fibre (18, 26) being located in the opening (46) of the third support (14, 32), the axis of said second optical fibre (18, 26) coinciding with the axis (Z) of said opening (46) of the third support (14, 32), the end of the third support (14, 32) being located on the side of the first support (10, 28), projecting beyond the second support (12, 30) and having an external shoulder (44) and the immobilization means (50, 51, 52, 54) are able to press the second support (12, 30) against said shoulder (44) and therefore the latter against the first support (10, 28), the second support (12, 30) having an external shoulder (48), the immobilization means having a clamp washer (51, 52, 54) and a retaining nut (50) to be screwed onto the first support (28) and for bearing against the shoulder (48) of the second support (12, 30) by means of the clamp washer (51, 52, 54), which has flanges (51, 52) provided with rotation locking tenons (56), which cooperate with notches (58) made in the said first support (10, 28), so as to prevent any untimely rotation of the second and third supports during their immobilization by the screwing of the retaining nut (50).

2. Wall according to claim 1, characterized in that the second support (30), the retaining nut (50) and the clamp washer (51, 52, 54) in each case have a radial slot (31, 58, 55) permitting the passage of the second optical fibre (26).

3. Wall according to either of the claims 1 and 2, characterized in that the first support (28) and the first optical fibre (24) are provided with sealing means (66, 70) making it possible to obtain a tight passage through the wall (62).
